# DEMANDE DE BREVET EUROPEEN

(11) **EP 1 028 014 A1**
(43) Date de publication de la demande: **16.08.2000**
(21) Numéro de dépôt: 00400364.6
(22) Date de dépôt: 09.02.2000
(51) Int. Cl.: B60J 1/17

(54) **Doublure intérieure, et portière ainsi équipée, comprenant un moyen pour limiter le déplacement d'une vitre selon une direction horizontale**

(30) Priorité: 12.02.1999 FR 9901746
(71) Demandeur: Meritor Light Vehicle Systems-France, 45000 Sully sur Loire (FR)
(72) Inventeur: Praud, Jean-Pierre, 95430 Auvers-sur-Oise (FR); Hesse, Christophe, 57462 Olpe (DE); Arquevaux, Laurent, 45600 Sully-sur-Loise (FR); Delire, Philippe, 72170 Beaumont-sur-Sarthe (FR)
(74) Mandataire: Lerner, François

(57) **Abrégé**

L'invention concerne une doublure intérieure (40) pour portière (10) de voiture, ladite doublure (40) étant équipée d'un panneau porteur (80) solidaire de celle-ci et sur lequel est fixé un mécanisme lève-vitre (60) équipé d'une vitre (30) monté sur un support (70), la doublure (40) étant équipée d'au moins un moyen de butée (100) pour limiter le déplacement latéral de ladite vitre (30) selon une direction sensiblement horizontale, ledit moyen de butée présentant une extrémité libre et une extrémité opposée liée au panneau porteur (80). L'invention se caractérise en ce que le moyen de butée (100) présente, au moins hors de toute contrainte exercée sur lui par la vitre, une forme naturellement incurvée comprenant une zone de contact avec la vitre, laquelle zone de contact est située à l'écart de l'extrémité libre du moyen de butée, ledit moyen de butée étant de plus capable de se déformer de façon élastique au contact de ladite vitre afin de repousser celle-ci en exerçant une force de rappel dirigée selon une direction sensiblement perpendiculaire à la direction de déplacement de la vitre (30).

## Description

Le domaine de l'invention est celui des équipements intérieurs pour véhicules automobiles et en particulier ceux associés aux portières de voitures.

Il existe déjà des portières de véhicule automobile comprenant :
- un panneau extérieur de portière, typiquement en tôle,
- une doublure intérieure de portière assemblée audit panneau extérieur et le recouvrant au moins partiellement, ledit panneau et la doublure définissant entre eux, au moins localement, un espace intérieur creux, la doublure comprenant un panneau porteur en matière plastique rigide, et
- une vitre, liée à au moins un mécanisme lève-vitre qui comprend au moins un moyen de support de ladite vitre au niveau d'une tranche inférieure de celle-ci et qui est lui-même fixé au panneau extérieur et/ou à la doublure intérieure, de telle sorte que la vitre puisse se déplacer sensiblement verticalement entre une première position haute et une seconde position basse dans laquelle elle pénètre à l'intérieur dudit espace intérieur de la portière.

Or sur ces pièces, on s'est aperçu qu'il y avait des problèmes de stabilité et de mauvais placement ou déplacement de la vitre à l'intérieur de la portière, notamment quand ladite vitre est légèrement bombée (comme c'est très souvent le cas actuellement) et qu'elle est au moins partiellement abaissée à l'intérieur de l'espace interne creux de la portière.

Cela peut notamment conduire à un défaut de fonctionnement de la vitre ou à un endommagement de celle-ci, en raison notamment des vibrations importantes que peut subir le véhicule (et donc la vitre) ou lors de la fermeture (brutale ou non) de la portière avec sa vitre partiellement ou totalement abaissée.

L'invention propose de résoudre ce problème à moindre coût et avec une bonne fiabilité. Pour cela, l'invention concerne une doublure intérieure pour portière de véhicule automobile, ladite doublure comprenant :
un panneau porteur en matière plastique rigide solidaire de celle-ci et sur lequel est fixé un mécanisme lève-vitre équipé d'une vitre et comprenant un moyen support de cette vitre mobile entre une première position haute et une seconde position basse pour le déplacement de ladite vitre,
au moins un moyen de butée élastique pour limiter le déplacement latéral de ladite vitre selon une direction sensiblement horizontale, ledit moyen de butée présentant une extrémité libre et une extrémité opposée liée au panneau porteur,

- caractérisée en ce que le moyen de butée présente une partie naturellement incurvée ouverte présentant une zone de contact avec la vitre, laquelle zone de contact est située à l'écart de l'extrémité libre du moyen de butée.

On entend par «partie naturellement incurvée» le fait que la forme de cette partie soit arrondie ou enroulée sans qu'aucun effort soit exercé dessus, en particulier une force d'appui de la vitre sur le moyen de butée.

Par ailleurs, le moyen de butée étant en appui constant contre la vitre, il est adapté pour se déformer de façon élastique et repousser la vitre en exerçant une force de rappel s'opposant aux mouvements latéraux de la vitre, et ce selon une direction sensiblement perpendiculaire à la direction normale de déplacement de la vitre (montée et/ou descente).

Pour limiter le plus possible les mouvements latéraux de la vitre à l'intérieur de l'espace intérieur creux de la portière et pour permettre un bon guidage de la vitre quelle que soit sa position à l'intérieur de cet espace, le moyen de butée élastique pourra comprendre une tige rigide terminée, vers l'extrémité libre dudit moyen de butée, par une portion élastiquement déformable présentant une ladite partie incurvée ouverte qui présente une forme de crochet contre laquelle la surface de la vitre prend appui, cette forme incurvée présentant, à l'endroit de sa zone de contact avec la vitre, des pentes inversées de guidage de la vitre sensiblement suivant ses deux mouvements de descente et de montée.

Selon une alternative, le moyen de butée élastique pourra comprendre une tige rigide terminée, vers l'extrémité libre dudit moyen de butée, par une portion élastiquement déformable présentant deux inflexions successives inversées lui donnant sensiblement la forme d'un S rabattu à plat.

Selon un aspect complémentaire, le panneau porteur intègrera de préférence le moyen de butée élastique qui se présentera alors sous la forme d'une nervure avec laquelle il est moulé d'une pièce.

L'invention concerne également une portière de véhicule automobile comprenant :
- un panneau extérieur de portière, typiquement en tôle,
- une doublure intérieure de portière assemblée audit panneau extérieur et le recouvrant au moins partiellement, ledit panneau extérieur et la doublure intérieure définissant entre eux, au moins localement, un espace intérieur creux, la doublure comprenant un panneau porteur en matière plastique rigide, et
- une vitre, liée à un mécanisme lève-vitre qui comprend un moyen de support de ladite vitre au niveau d'une tranche inférieure de celle-ci et qui est lui-même fixé au panneau extérieur et/ou à la doublure intérieure, de telle sorte que la vitre puisse se déplacer sensiblement verticalement entre une première position haute et une seconde position basse dans laquelle elle pénètre à l'intérieur dudit espace intérieur de la portière,
- le panneau porteur étant équipé, à un niveau intermédiaire, d'au moins un moyen de butée élastique coopérant avec ladite vitre pour en limiter le déplacement latéral selon une direction sensiblement horizontale, ledit moyen de butée présentant une extrémité libre et une extrémité opposée liée au panneau porteur,
- caractérisée en ce que le moyen de butée présente une partie naturellement incurvée ouverte présentant une zone de contact avec la vitre, laquelle zone de contact est située à l'écart de l'extrémité libre du moyen de butée.

L'invention et sa mise en oeuvre apparaîtront encore plus clairement à l'aide de la description qui va suivre, faite en référence aux dessins dans lesquels :
- la figure 1 est une vue éclatée d'une portière de véhicule,
- la figure 2 est une vue en coupe de la portière de la figure 1, avec la vitre en position haute,
- la figure 3 est une vue en coupe identique à celle de la figure 2, mais avec la vitre en position totalement abaissée,
- la figure 4 est une vue de face d'un élément de la portière des figures 2 et 3, et
- la figure 5 est une vue de détail des figures 2 et 3.

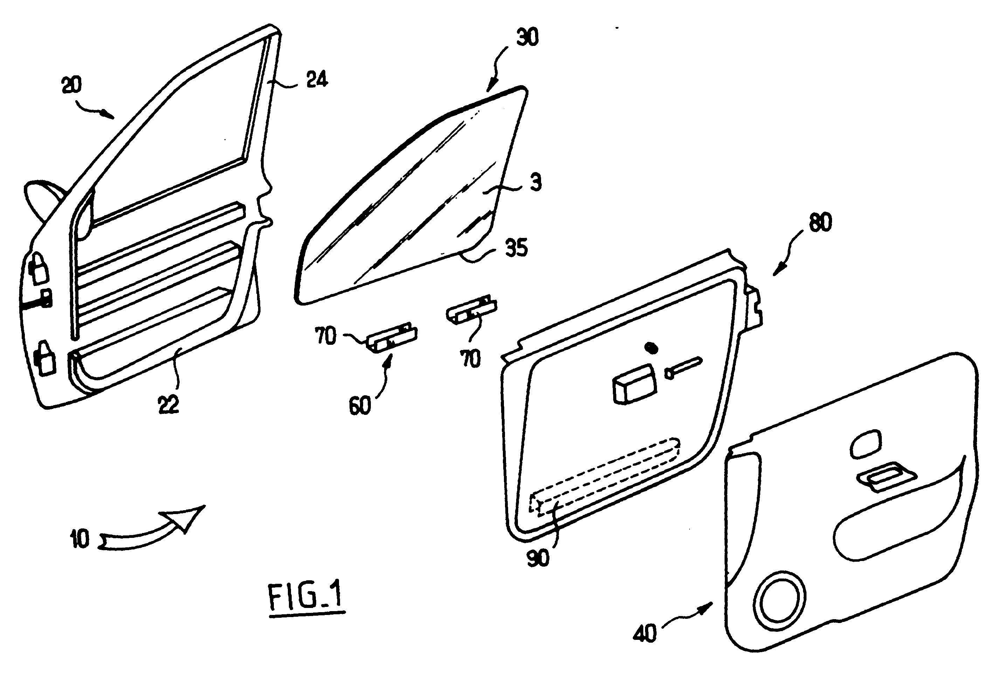

Sur la figure 1, on voit donc illustré un ensemble conventionnel de portière automobile, repéré 10.

Cet ensemble comprend un panneau extérieur 20 en l'espèce en tôle (mais pouvant aussi être en matériau plastique ou en composite), divisé en une partie basse 22 (appelée ceinture) et une partie haute 24 servant d'encadrement à une vitre 30 typiquement en verre.

Une doublure intérieure 40 (appelé encore garnissage ou habillage) recouvre au moins partiellement cette tôle 20 du coté intérieur de l'habitacle du véhicule, en particulier au niveau de la ceinture 22 de la portière 10. Eventuellement, les montants de l'encadrement 24 pourraient également être doublés. Cette doublure 40 a un rôle esthétique et d'étanchéité. Elle sert aussi à masquer et/ou à recevoir divers éléments ou équipements fonctionnels mécaniques ou électriques du véhicule (haut parleur, verrou, poignée de porte, lève-vitre, guide-vitre, réseau électrique, divers joints d'étanchéité, etc...).

De façon conventionnelle, cette doublure intérieure 40 est assemblée au panneau extérieur 20 par des pièces élastiquement déformables (non représentées) telles que des agrafes (appelées encore « clips »), disposées notamment en périphérie de la doublure 40, la face intérieure du panneau en tôle 20 présentant alors des orifices complémentaires (non représentés) destinés à les recevoir. Un tel assemblage peut être amovible pour permettre de démonter la doublure intérieure du panneau extérieur de la portière.

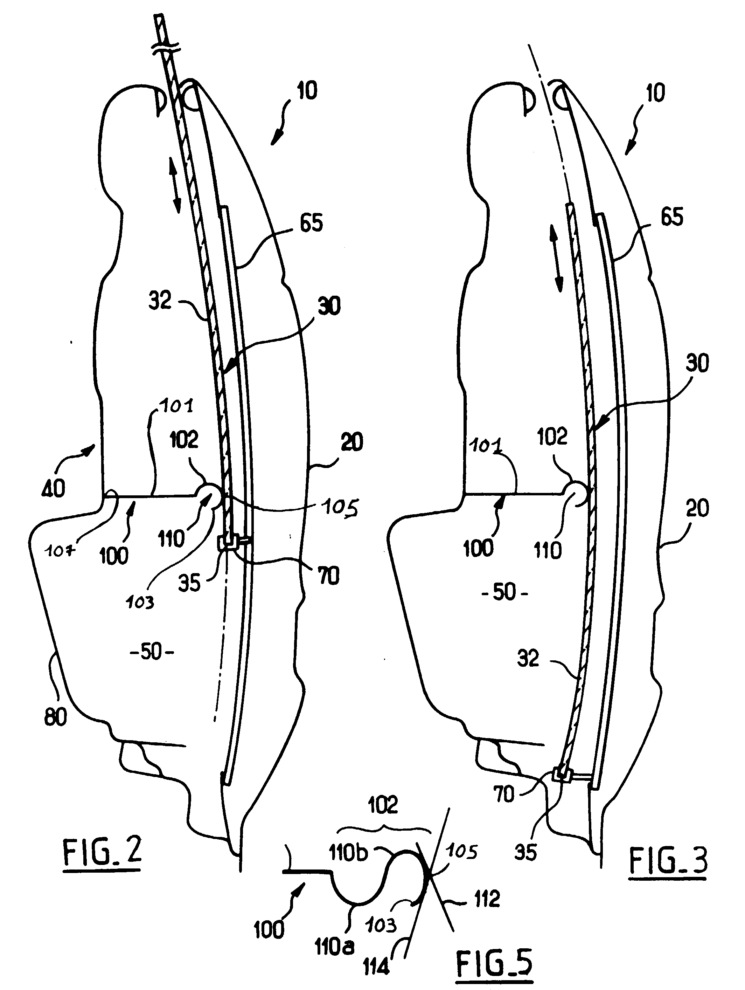

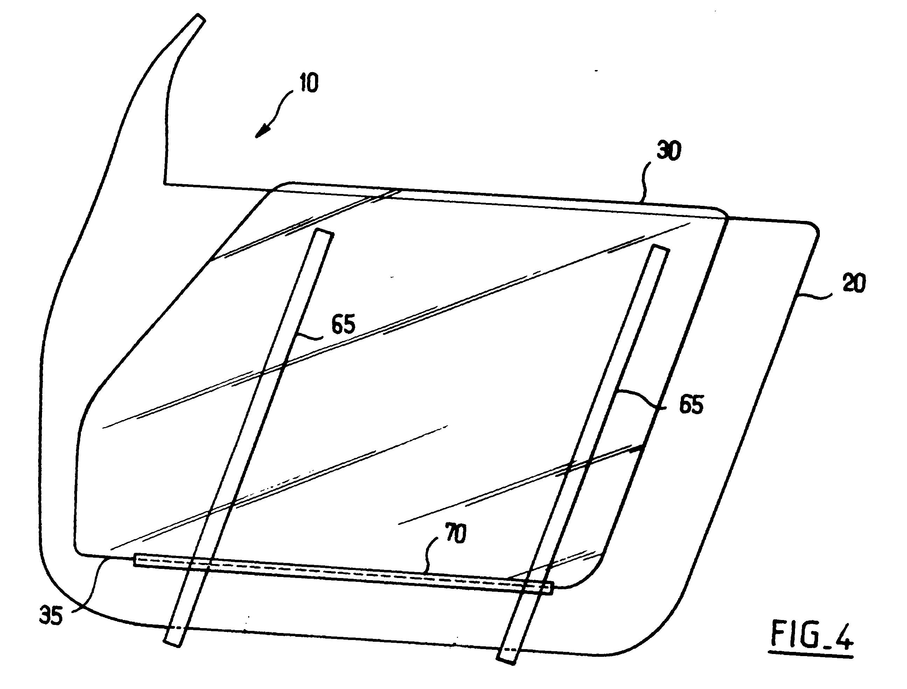

Au niveau de la ceinture 22, la doublure 40 et le panneau extérieur 20 définissent entre eux un espace intérieur creux 50 (voir les figures 2 et 3) destiné en particulier à recevoir les éléments et équipements fonctionnels cités précédemment et en particulier un mécanisme 60 lève-vitre comprenant par exemple deux glissières verticales 65 (voir figures 2 à 6) pour le déplacement sensiblement vertical de la vitre 30, cette dernière étant maintenue, au niveau d'une tranche inférieure 35, par au moins un moyen support 70 coulissant (soit à l'aide d'un moteur électrique, soit à l'aide d'une poignée) dans les glissières 65. Typiquement, comme on peut le voir sur la figure 1, deux éléments de support 70, présentant en coupe une forme en U, viennent serrer la tranche inférieure 35 de la vitre 30 et coopèrent avec les deux glissières 65. En alternative, le moyen support 70 peut s'étendre sur l'essentiel de la tranche inférieure 35 de la vitre et coopérer avec deux glissières 65 (voir figure 4). On peut également envisager un moyen support 70 court disposé au milieu de la tranche inférieure 35 de la vitre et coopérant avec une seule glissière centrale.

La doublure intérieure 40 présente également un panneau porteur 80 indépendant de celle-ci réalisé en particulier par une technique de moulage par injection dans une matière plastique rigide telle que du polypropylène ou un autre thermoplastique.

Comme on peut le voir sur les figures 2 et 3, le panneau porteur intègre une nervure 100 destinée à faire office de moyen de butée pour absorber les éventuels mouvements latéraux (droite/gauche, selon l'horizontale) intempestifs de la vitre. Ainsi, cette nervure 100 est placée a priori dans la moitié supérieure et de préférence le tiers supérieur du panneau porteur 80, dans l'espace 50 situé entre l'habillage 40 et la vitre 30.

La vitre 30 n'ayant pas toujours un déplacement parfaitement rectiligne, en particulier si elle est courbée (comme cela est très fréquent aujourd'hui), il faut bien entendu prévoir de bien positionner la nervure de butée latérale 100 pour qu'elle soit constamment en contact avec ladite surface 32 de la vitre 30 dans toutes les positions de celle-ci, et notamment lorsqu'elle est partiellement ou totalement abaissée à l'intérieur de l'espace interne creux 50 de la portière.

Pour cela, la nervure 100, qui est de préférence moulée d'une pièce avec le panneau porteur, présente une forme naturelle incurvée 110, (au contraire de poils utilisés dans l'art antérieur), c'est-à-dire hors de toute contrainte provoquée par le contact avec la vitre 30. Cette forme incurvée (ou enroulée) 110 présente une zone de contact 105 avec la surface 32 de la vitre 30 qui est située à l'écart de l'extrémité libre 103 de ladite nervure pour éviter un phénomène de « broutement » de la vitre contre le moyen de butée lors de ses mouvements de montée et de descente.

Le moyen de butée 100, et plus spécifiquement sa forme incurvée 110, est également adapté pour pouvoir se déformer élastiquement selon une direction sensiblement perpendiculaire aux mouvements de montée et descente de la vitre afin de repousser celle-ci en exerçant une force de rappel élastique sensiblement horizontale de façon à assurer un guidage et une stabilisation de la vitre selon son axe de normal déplacement.

En particulier, comme on peut le voir sur les figures 2 et 3, la nervure de butée 100 comprend une tige rigide 101 sensiblement horizontale se terminant, vers l'extrémité libre 103 du moyen de butée 100 opposée à une extrémité fixe 107, par une partie 102 élastiquement déformable présentant une partie 110 incurvée ouverte vers le bas, sensiblement en forme de « C » ou de crochet. Au niveau de la zone de contact 105 avec la surface 32 de la vitre 30, cette zone incurvée 110 présente des pentes inversées 112 et 114 (voir figure 5) de telle sorte que le guidage de la vitre lors de ses mouvements de montée et descente est réalisé en douceur, sans aucun à-coup gênant.

Comme on peut aussi le voir sur la variante de réalisation de la figure 5, la partie élastiquement déformable 102 présente deux inflexions 110a/110b successives inversées lui donnant sensiblement la forme d'un « S » rabattu à plat. La force de rappel élastique repoussant la vitre est ainsi répartie entre les deux inflexions 110a et 110b, ce qui donne un meilleur appui avec la vitre car cette force n'est ni trop importante ni trop faible. Le contact entre la vitre et le moyen de butée élastique 100 se fait toujours par l'intermédiaire d'une portion arrondie 110 aux formes douces dues aux pentes de guidages 112/114 inversées au niveau du point de contact 105.

La forme incurvée 110 peut être équipée d'un patin antidérapant (et éventuellement également amortissant) au niveau de point de contact pour éviter de rayer la vitre, tel par exemple qu'un morceau de feutre.

Dans les deux cas représentés, les problèmes de stabilité latérale de la vitre sont corrigés par le moyen de butée 100 qui réagit aux mouvements intempestifs de la vitre en prenant appui sur elle de façon constante et en exerçant une force de rappel repoussant la vitre.

Bien entendu, l'invention n'est nullement limitée aux différents modes de réalisation préférentiels illustrés à titre d'exemple.

Ainsi, le panneau porteur 80 peut constituer seulement un médaillon intégré à la doublure intérieure 40. Dans tous les cas, la nervure 100 est bien entendu réalisée de matière avec ce panneau porteur 80 et est disposée à l'intérieur de l'espace interne creux 50 de la portière 10.

La forme incurvée 110 de la partie 102 élastiquement déformable de la nervure 100 peut être modifiée à volonté au moment de la fabrication du panneau 80 dès lors qu'elle permet de prendre appui contre la vitre 30 de façon élastique et ne gêne pas ses déplacements naturels de haut en bas. On pourra par exemple choisir une forme en « W » arrondi et couché à plat (une sorte de 3) avec éventuellement une tige 101 sensiblement en accordéon, une forme en coeur avec deux « C» face à face, ou tout autre forme douce ayant une inversion de leur pente au niveau du point de contact avec la vitre.

## Revendications

1. Doublure intérieure (40) pour portière (10) de véhicule automobile, ladite doublure (40) comprenant :
- un panneau porteur (80) en matière plastique rigide solidaire de celle-ci et sur lequel est fixé un mécanisme lève-vitre (60) équipé d'une vitre (30) et comprenant un moyen support (70) de cette vitre mobile entre une première position haute et une seconde position basse pour le déplacement de ladite vitre (30),
- au moins un moyen de butée élastique (100) pour limiter le déplacement latéral de ladite vitre (30) selon une direction sensiblement horizontale, ledit moyen de butée (100) présentant une extrémité libre (103) et une extrémité opposée (107) liée au panneau porteur (80),
caractérisée en ce que le moyen de butée (100) présente une partie (110) naturellement incurvée ouverte présentant une zone de contact (105) avec la vitre, laquelle zone de contact (105) est située à l'écart de l'extrémité libre (103) du moyen de butée.

2. Doublure intérieure selon la revendication 1, caractérisée en ce que le moyen de butée élastique (100) comprend une tige (101) rigide terminée, vers l'extrémité libre (103) dudit moyen de butée, par une portion (102) élastiquement déformable présentant une ladite partie incurvée (110) ouverte qui présente une forme de crochet contre laquelle la surface (32) de la vitre (30) prend appui, cette forme incurvée (110) présentant, à l'endroit de sa zone de contact (105) avec la vitre, des pentes inversées (112/114) de guidage de la vitre (30) sensiblement suivant ses deux mouvements de descente et de montée.

3. Doublure (40) intérieure selon la revendication 1, caractérisé caractérisée en ce que le moyen de butée élastique (100) comprend une tige (101) rigide terminée, vers l'extrémité libre (103) dudit moyen de butée, par une portion (102) élastiquement déformable présentant deux inflexions (110a, 110b) successives inversées lui donnant sensiblement la forme d'un S rabattu à plat.

4. Doublure selon l'une quelconque des revendications précédentes, caractérisée en ce que le panneau porteur (80) intègre le moyen de butée élastique (100) qui se présente sous la forme d'une nervure avec laquelle il est moulé d'une pièce.

5. Portière (10) de véhicule automobile comprenant :
- un panneau extérieur (20) de portière (10), typiquement en tôle,
- une doublure intérieure (40) de portière (10) assemblée audit panneau extérieur (20) et le recouvrant au moins partiellement, ledit panneau extérieur (20) et la doublure intérieure (40) définissant entre eux, au moins localement, un espace intérieur creux (50), la doublure (40) comprenant un panneau porteur (80) en matière plastique rigide, et
- une vitre (30), liée à un mécanisme lève-vitre (60) qui comprend un moyen de support (70) de ladite vitre au niveau d'une tranche inférieure (35) de celle-ci et qui est lui-même fixé au panneau extérieur (20) et/ou à la doublure intérieure (40), de telle sorte que la vitre (30) puisse se déplacer sensiblement verticalement entre une première position haute et une seconde position basse dans laquelle elle pénètre à l'intérieur dudit espace intérieur (50) de la portière (10),
- le panneau porteur (80) étant équipé, à un niveau intermédiaire, d'au moins un moyen de butée élastique (100) coopérant avec ladite vitre (30) pour en limiter le déplacement latéral selon une direction sensiblement horizontale, ledit moyen de butée (100) présentant une extrémité libre (103) et une extrémité opposée (107) liée au panneau porteur (80),
caractérisée en ce que le moyen de butée (100) présente une partie (110) naturellement incurvée ouverte présentant une zone de contact (105) avec la vitre, laquelle zone de contact (105) est située à l'écart de l'extrémité libre (103) du moyen de butée.

6. Portière (10) selon la revendication 5, caractérisée en ce que le moyen de butée élastique (100) comprend une tige (101) rigide terminée, vers l'extrémité libre (103) dudit moyen de butée, par une portion (102) élastiquement déformable présentant une ladite partie incurvée (110) ouverte qui présente une forme de crochet contre laquelle la surface (32) de la vitre (30) prend appui, cette forme incurvée (110) présentant, à l'endroit de sa zone de contact (105) avec la vitre, des pentes inversées (112/114) de guidage de la vitre (30) sensiblement suivant ses deux mouvements de descente et de montée.

7. Portière (10) selon la revendication 5, caractérisé en ce que le moyen de butée élastique (100) comprend une tige (101) rigide terminée, vers l'extrémité libre (103) dudit moyen de butée, par une portion (102) élastiquement déformable présentant deux inflexions (110a, 110b) successives inversées lui donnant sensiblement la forme d'un S rabattu à plat.

8. Portière selon l'une quelconque des revendications 5 à 7, caractérisée en ce que le moyen de butée (100) est une nervure moulée d'une pièce avec le panneau porteur (80) et faisant saillie de celui-ci en direction de la vitre.
